# EUROPEAN PATENT APPLICATION

(11) **EP 2 990 901 A1**
(43) Date of publication of application: **02.03.2016**
(21) Application number: 15180825.0
(22) Date of filing: 12.08.2015
(51) Int. Cl.: G05D 1/02

(54) **SYSTEM OF SELF-MOBILE CARTS WITH THEIR OWN NAVIGATION SYSTEM**

(30) Priority: 31.08.2014 US 201414474141
(71) Applicant: Segman, Yosef, 3095035 Zichron Yaakov (IL)
(72) Inventor: SEGMAN, Yosef, 3095035 Zichron Yaakov (IL); SEGMAN, Yehonatan, 3095035 Zichron Yaakov (IL); SEGMAN, Itamar, 3095035 Zichron Yaakov (IL)
(74) Representative: Gallo, Luca

(57) **Abstract**

A cart transportation system, comprising a one or more carts; a communication device incorporating a user controller that includes at least a transmitter unit, the user controller wirelessly transmitting electronic instructions to each cart controller or to a lead cart controller, each cart including a navigation system for self-mobility in communication with the user controller, the navigation system including at least (i) a set of traction drivers for movement, (ii) a motor; and (iii) a cart controller including a transmitter unit and receiver unit for transmitting and receiving electronic instructions so the cart controller of a particular cart defines and controls the particular cart to do at least one of (i) follow the communications device held or worn by a user; (ii) return to a base station; (iii) follow other carts of the one or more carts; and (iv) move from a first location to a second location.

## Description

### FIELD AND BACKGROUND OF THE INVENTION

The present invention relates to transportation of carts, and, more particularly to a train of one or more carts that may be unconnected to one another following a traveler or a lead cart through remote control.

Travelers move multiple carts by loading them onto a cart. This requires heavy lifting onto and off the cart. Pushing the loaded cart also generates a certain amount of strain. This is particularly strenuous over the long distances commonly found in airports, train stations and bus stations.

It would also be useful to have a better way to move multiple carts, particularly heavy carts, whether suitcases, trolley-type suitcases, baby strollers, prams, supermarket carts, cargo carts, etc.

There is a compelling need to have an apparatus and method that will provide a more convenient way for individuals to transport multiple carts, particular heavy carts.

### SUMMARY OF THE PRESENT INVENTION

One aspect of the present invention is a cart transportation system, comprising: one or more carts; a communication device incorporating a user controller, the user controller including at least a transmitter unit, the user controller for wirelessly transmitting electronic instructions via a communications protocol in at least one wavelength to either (i) each cart controller in the one or more carts or to (ii) a lead cart of the one or more carts, for each cart of the one or more carts, a navigation system for self-mobility in communication with the user controller, the navigation system including at least (i) a set of traction drivers for movement along a ground, (ii) a motor connected to the set of traction drivers for actuating the set of traction drivers and for turning at least one traction driver of the set of traction drivers; and (iii) a cart controller powered by a power supply and including a processor and software, a transmitter unit and a receiver unit, the cart controller of a particular cart of the one or more carts for controlling the motor, transmitter unit and receiver unit and for transmitting and receiving electronic instructions so as to define and control the functionality of the particular cart in the one or more carts in accordance with at least one of the following: (i) to follow the communications device held or worn by a user; (ii) to return to a base station; (iii) to follow other carts of the one or more carts; and (iv) to move from a first location to a second location.

A further aspect of the present invention is a cart transportation system comprising a cart transportation system, comprising one or more carts that are each self-mobile; a lead magnet that alone, or incorporated into a device, is portable or wearable by a user; each cart of the one or more carts having a set of wheels for moving along a ground and having a follower magnet either inside said each cart or rigidly affixed to said each cart such that the said each cart follows the user when the user moves, the magnetic force between the follower magnet and the lead magnet effective to apply at least a force of 10 newtons when the lead magnet and follower magnet are magnetically linked.

These and other features, aspects and advantages of the present invention will become better understood with reference to the following drawings, descriptions and claims.

### BRIEF DESCRIPTION OF THE DRAWINGS

Various embodiments are herein described, by way of example only, with reference to the accompanying drawings, wherein:
FIG. 1 is a side view of a cart transportation system, in accordance with one embodiment of the present invention;
FIG. 2 is a schematic view of a cart transportation system where the user controller transmits to the lead cart and the lead cart transmits to remaining carts, in accordance with one embodiment of the present invention;
FIG. 3 is a schematic view of a navigation system including a cart controller, in accordance with one embodiment of the present invention;
FIG. 4 is a schematic view of a user controller, in accordance with one embodiment of the present invention;
FIG. 5 is a side view of a shopping cart transportation system, in accordance with one embodiment of the present invention;
FIG. 6 is a view from the front and side of one or more carts being wirelessly directed by a user around an obstacle at an airport, in accordance with one embodiment of the system of the present invention; and
FIG. 7 is a view from the front and side of one or more carts being directed magnetically by a user around an obstacle in an airport, in accordance with one embodiment of the present invention.

### DETAILED DESCRIPTION OF THE INVENTION

The following detailed description is of the best currently contemplated modes of carrying out the invention. The description is not to be taken in a limiting sense, but is made merely for the purpose of illustrating the general principles of the invention, since the scope of the invention is best defined by the appended claims.

The present invention generally provides a way of transporting one or more carts, which may for example be pieces of baggage/luggage in an airport or supermarket carts at a supermarket, without the user having to manually pull, lift or push the carts. Examples of applications of the present invention include one or more of the following: (a) having one or more carts, such as a suitcase or item of baggage or shopping cart or airport cart or lift cart, automatically follow a user such as a traveler, worker or a supermarket customer; (b) having multiple items of baggage follow one another; (c) direct a cart to move to a local station (for example returning a shopping cart to a supermarket's local station storing its supermarket carts) (d) having a baby stroller, perambulator or pram either following the mother automatically and independently, or else having it move along automatically with the mother also holding and pushing it, so as to facilitate the mother's efforts.

In one preferred embodiment, the system comprises one or more carts; a communication device incorporating a user controller, the user controller including at least a transmitter unit (and preferably also a receiver unit), the user controller for wirelessly transmitting (and in a preferred embodiment also receiving from) electronic instructions via a communications protocol in at least one wavelength to either (i) each cart controller in the one or more carts or to (ii) one or more lead carts of the one or more carts. In the latter case, the lead cart or carts then defines and controls the remaining carts of the one or more carts. For each cart of the one or more carts, a navigation system for self-mobility in communication with the user controller, the navigation system including at least (i) a set of traction drivers for movement along a ground, (ii) a motor connected to the set of traction drivers for actuating the set of traction drivers and for turning at least one traction driver of the set of traction drivers; and (iii) a cart controller powered by a power supply and including a processor and software, a transmitter unit and a receiver unit, the cart controller of a particular cart of the one or more carts for controlling the motor, transmitter unit and receiver unit and for transmitting and receiving electronic instructions so as to define and control the functionality of the particular cart in the one or more carts in accordance with at least one of the following: (i) to follow the communications device held or worn by a user; (ii) to return to a base station; (iii) to follow other carts of the one or more carts; and (iv) to move from a first location to a second location.

In other preferred embodiments, the controller is in wireless communication with at least one lead cart and the at least one lead cart is directly or indirectly in wireless communication with each remaining cart of the plurality. The term "lead" cart simply refers to a situation, in certain preferred embodiments, where at least one "lead" cart, which may be communication with the controller, may direct other carts of the one or more carts.

In contrast to prior art groups of luggage or other cart transportation systems, (where the word "cart" includes a piece of luggage, a shopping cart, etc. as that word is defined herein) in which each cart has to be pushed, pulled and lifted manually, the system of the present invention may utilize carts that move themselves without any manual intervention. In contrast to prior art luggage assemblies that can be rolled along the floor manually, the present invention allows the user to walk ahead and have the lugagge simply follow the user, who may be holding or wearing the controller. In contrast to prior art systems, in which heavy lugagge has to be manually loaded onto a trolley in order to transport all the pieces of luggage in unison, such as all the luggage of a family that is traveling, the cart system of the present invention allows the carts (i.e. pieces of luggage) to move along the ground on their won without any lifting or even tilting of the luggage.

The principles and operation of System of Self-Mobile Carts With Their Own Navigation Systems may be better understood with reference to the drawings and the accompanying description.

A signal used in this transportation system can be digital or analog. A receiver unit has an antenna and a transmitter unit has an antenna.

The term "follow" as used herein in the context of following an object or user includes following the object or user from behind, from the front, from a side or from an angle to the user or to the object.

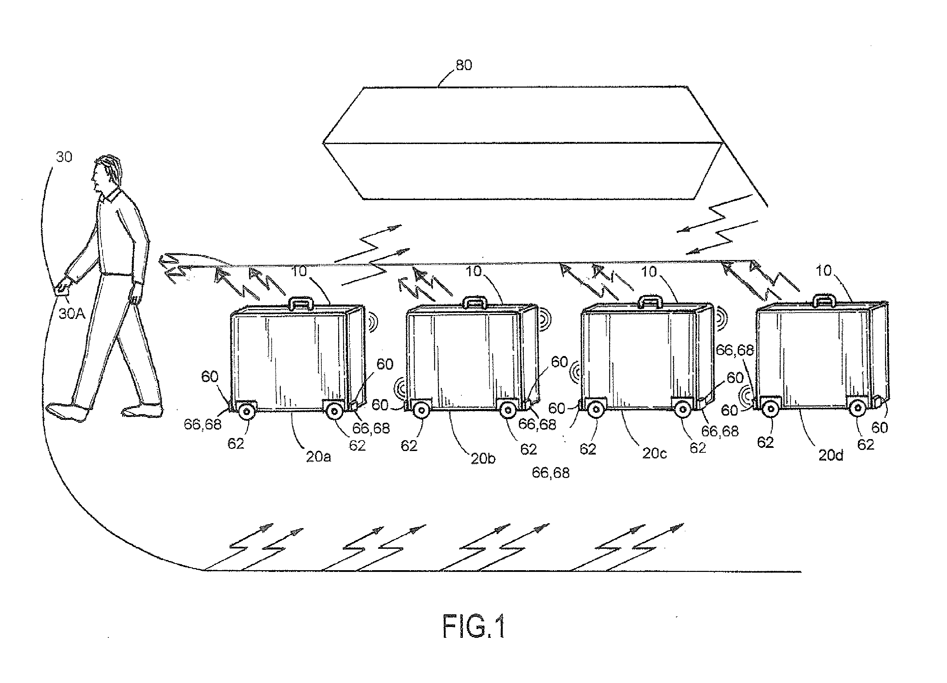

A shown in FIGS. 1-4, a cart transportation system 10 may comprise one or more carts 20, for example carts 20a, 20b, 20c and so on. In one preferred embodiment, the one or more carts 20 is a plurality of two or more carts 20. The term "cart" includes any mobile traction-driven container whether for carrying baggage for travelers in the case of a suitcase, a trolley, a baby stroller, perambulator, pram, an airport cart or lift cart used by movers or a supermarket cart for supermarket purchases. "Cart" also includes wheeled or other traction-driven carriages that carry suitcases, for example airport baggage carts that carry multiple suitcases.

System 10 may also include a communication device incorporating a user controller 30. The user controller 30 may include at least a transmitter unit 32 and preferably also a receiver unit 34. User controller 30 may thereby control wirelessly transmitting electronic instructions via a communications protocol, in at least one wavelength, to at least one cart controller 40 of at least one cart in the one or more carts 20, and in a preferred embodiment also controls wireless receiving electronic instructions via the communications protocol from at least one cart controller 40. In one preferred embodiment, that shown in FIG. 1, user controller 30 transmits to each and every cart 20a, 20b, 20c, 20d and receives wirelessly from each cart 20, 20b, 20c, 20d of the one or more carts. The carts 20a, 20b, 20c, 20b may also transmit and receive wirelessly to and from one another. In one preferred embodiment, the at least one wavelength is at least one of infra red, radio waves, visual wavelength, short wave, mid wavelength, long wavelength, ultra short wavelength and ultra long wavelength. The wavelength is not a limitation of the present invention.

In any embodiment of the present invention, the number of carts 20 in the one or more carts 20 in any preferred embodiment of the present invention can be any number, for example a plurality of carts, and is not of course limited to two carts, four carts or a specific number of carts depicted in any of the drawings herein.

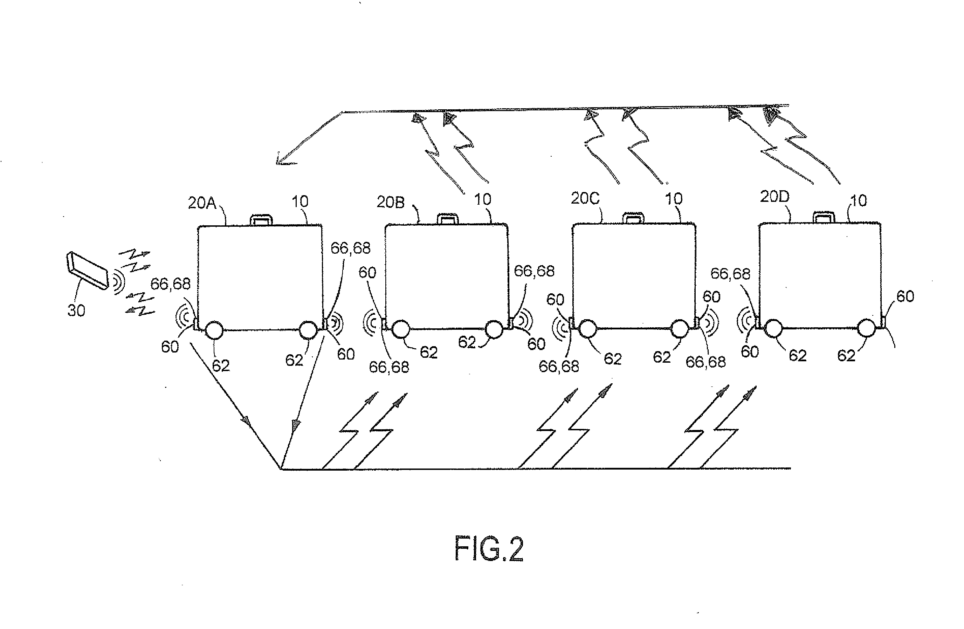

In a different preferred embodiment in which the one or more carts is a plurality of carts, the user controller 30 wirelessly transmits electronic instructions via the communications protocol in at least one wavelength to one or more lead carts 20A (FIG. 2) of the one or more carts 20 and that lead cart or carts in turn transmits electronic instructions wirelessly via the communications protocol to the remaining carts so as to define and control these remaining one or more carts of the one or more carts. This is schematically illustrated in FIG. 2. It should be noted that FIG. 2 does not attempt to depict the actual location or specific placement within a cart 20 of the transceiver 66, the receiver 68 (or a transceiver) of each cart 20 nor does FIG. 2 intend to define the specific path of the wireless EMF transmission between carts 20. It is merely a matter of design choice as to whether a particular cart 20 has a transceiver in one location or whether it instead has a transmitter 66 in one location and a receiver 68 in another part of the cart 20. FIG. 2 shows generally a bidirectional wireless EMF path between lead cart 20A and the remaining carts 20B, 20C, 20D and a bidirectional wireless EMF transmission path between lead cart 20A and user controller 30. The carts 20b, 20c, 20b may also transmit and receive wirelessly to and from one another.

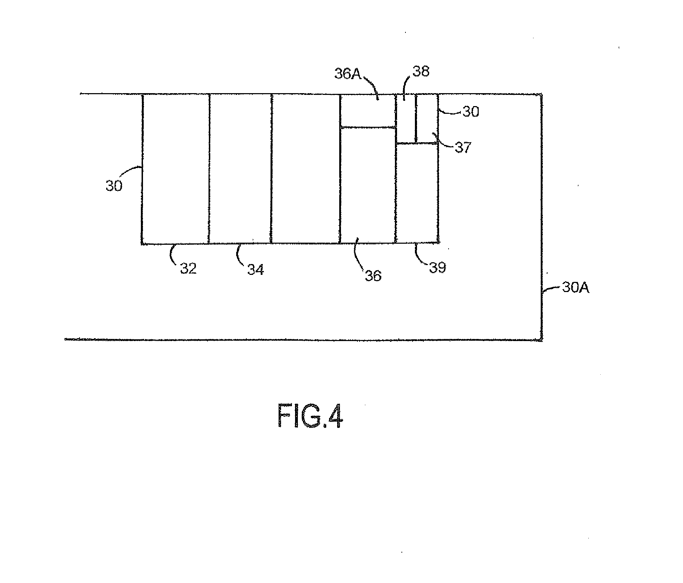

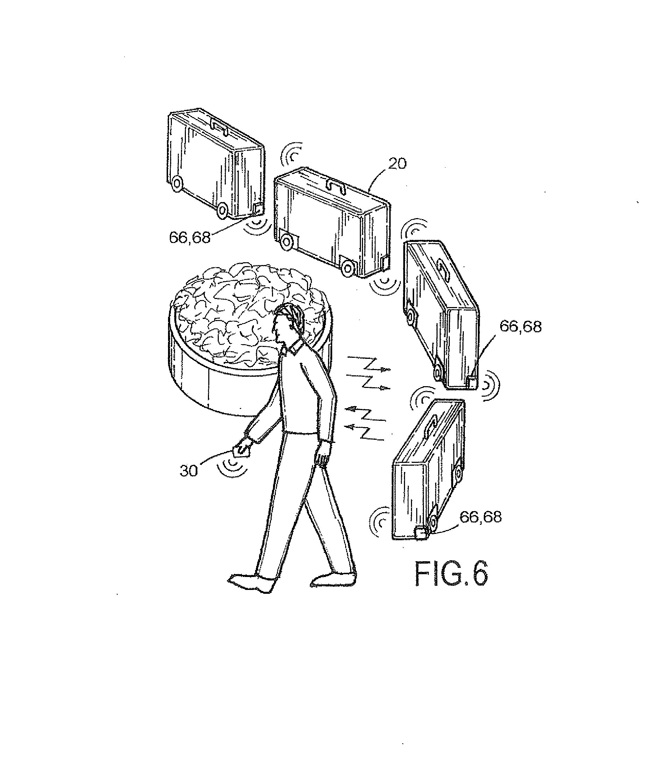

Typically, user controller 30 has fewer capabilities than cart controller 40, although in one preferred embodiment shown in FIG. 4, user controller 30 may also include a processor 39 and software 37. Furthermore, in some preferred embodiments, as shown in FIG. 4, user controller 30 includes a microphone 36 and voice recognition software 38 (which may be part of the overall software 37 of user controller 30) and optionally a speaker 36A. The voice recognition software 38 may convert the voice commands of a user holding the user controller 30 to a data format understandable by a processor 39. Thus, in certain preferred embodiments, a user merely speaks and directs movement of the luggage or other carts to follow him or her. More specifically, as best appreciated from FIG. 6, if a user sees an upcoming obstacle in the path of the line of carts (i.e. luggage in one example, or shopping carts in another example), the user can speak to the carts and direct them to turn left or right to avoid the obstacle, much the way he or she might direct a child to move left or right. Similarly, if a user sees an upcoming escalator, the carts may be told to halt, until a decision is made how to either avoid or navigate the escalator.

Typically, as shown in FIG. 4, user controller 30 is incorporated into a communication device 30A, such as a remote control device or a mobile phone or other portable device. A communication device 30A incorporating user controller 30 may be structured to be carried by a user, which may be a human or animal, or fitted onto an article of clothing such as a belt or fitted onto a keychain. If user controller 30 is a component incorporated into a mobile phone 30A or other appliance or device, the device or appliance, for example a cell phone, may include specific software application(s) that may be dedicated to or tailored for the present invention, for example for communicating with, configuring/defining and controlling at least one cart of the one or more carts. The above examples are in no way limiting but are merely examples of how the user controller 30 may be structured so as to not require a user to carry objects beyond what he or she normally carries.

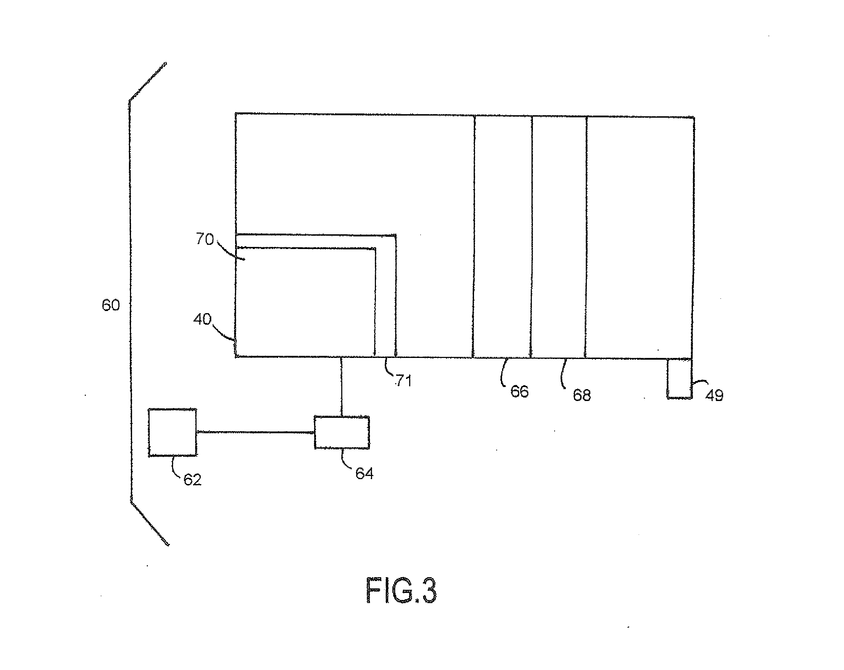

For each cart 20 of the one or more carts 20, system 10 may include a navigation system 60 for self-mobility in communication with the user controller 30. As seen from FIG. 3, the navigation system 60 may include at least (i) a set of traction drivers 62 for movement along a ground, (ii) a motor 64 connected to the set of traction drivers 62 for actuating the set of traction drivers and for turning at least one traction driver of the set of traction drivers; and (iii) a cart controller 40 powered by a power supply and including a processor and software, a transmitter unit and a receiver unit.

In a preferred embodiment the traction drivers 62 are wheels 62. In other preferred embodiments, instead of a wheel, the cart may have a track (not shown) as its traction driver 62.

Navigation system 60 may also include a motor 64 connected to the set of traction drivers 62 for actuating the set of traction drivers 62 and for turning at least one traction driver 62 of the set of traction drivers. In a preferred embodiment, motor 64 is configured to turn all traction drivers 62 in the set of traction drivers, or at least two or at least three or at least four traction drivers 62, which may be wheels 62. The set of traction drivers 62 may be connected to the motor 64 and controlled (for example via the motor 64) by the controller 40 in such a way as to allow each cart to travel forward, travel backward, turn left and turn right. The term "ground" includes any place that is sufficiently solidified and on which a cart with a traction driver can move to transport items in the cart 20. A ground may or may not have earth and may have a man-made or natural floor. The ground need only be solidified enough for a vehicle with traction drivers to move along on it. The ground may be level or may not be level. In a preferred embodiment, the ground is dry, although in other preferred embodiments, the ground may be comprised of fluid, in which case, for example a body of water may interact with a traction driver to move a cart forward.

As shown in FIG. 3. cart controller 40 may control the motor 64, the transmitter unit 66 and the receiver unit 68 of the navigation system 60. Accordingly, a cart controller 40 of a particular cart 20 may control the transmitting and receiving of electronic instructions so as to define and control the functionality of that particular cart in the one or more carts in accordance with at least one of the following: (i) to follow the communications device held or worn by a user; (ii) to return to a base station; (iii) to follow other carts of the one or more carts; and (iv) to move that particular cart 20 from a first location to a second location.

In one preferred embodiment, all carts 20 of the one or more carts have the same functionality. In another preferred embodiment, one cart 20 may be defined to follow a user and one or more of the other carts of the one or more carts 20 may have been defined by the cart controller 40 to follow other carts, while a still further cart has been defined to return to a base station.

In other preferred embodiments, the cart controller defines and controls the functionality of each cart in the plurality in accordance with at least one of the following: (i) to follow the communications device held or worn by a user; (ii) to return to a base station; (iii) to follow other carts of the one or more carts. In still other preferred embodiments, the cart controller defines the functionality of each cart in the plurality in accordance with at least one of the following: (i) to follow the communications device held or worn by a user; and (ii) to follow other carts of the one or more carts.

Cart controller 40 may be powered by any suitable power supply 49, which may include a DC power source (i.e. battery, cell) or direct power supply, a system of converting sunlight, a system of converting motion of wind or air power or human movement to electricity or in some cases converting a mechanical movement of the wheels to electrical energy, or any combination of these examples. The power can also, in certain preferred embodiments, an AC power source that may have electric wiring to an electric outlet, especially in cases where the controller is not situated in any of the carts 20 of system 10.

Cart controller 40 may control wireless electronic communication to user controller 30. Although cart controller 40 may control wireless communication with user controller 30, cart controller 40 may communicate through a wired connection to other components of the cart or wirelessly (for example cart controller 40 of first cart 20A may communicate either wirelessly or through a wired connection with any of the components of first cart 20A and likewise cart controller 40 of second cart 20B may communicate either wirelessly or by wired connection to other components of second cart 20B, and so on for each cart of the one or more carts 20.

Cart controller 40 may include a CPU 70 and software 71, a transmitter unit 66 and a receiver unit 68 for transmitting and receiving wirelessly via a communications protocol. The communications protocol is such as to render wireless communications to be possible between all components of system 10 that may be included in system 10, for examaple the cart controller 40, motor 64, GPS, display, power supply, wheels 62, magnetic transmitter and receiver, optical transmitter and receiver. Preferably, such wireless communication should be made possible at a high level of reliability. In some preferred embodiments, the communications protocol is a short-range communications protocol such as Bluetooth (including, for example class 1 radio for up to one meter, class two radio for up to ten meters or class three radio for up to 100 meters), NFC, WiFi, infrared or other communications protocols of suitable range, although this is not a limitation since in other preferred embodiments the communications protocol is mid-range (for example up to 200 meters or up to 400 meters or up to 800 meters or up to 1500 meters) or a long-range communications protocol.

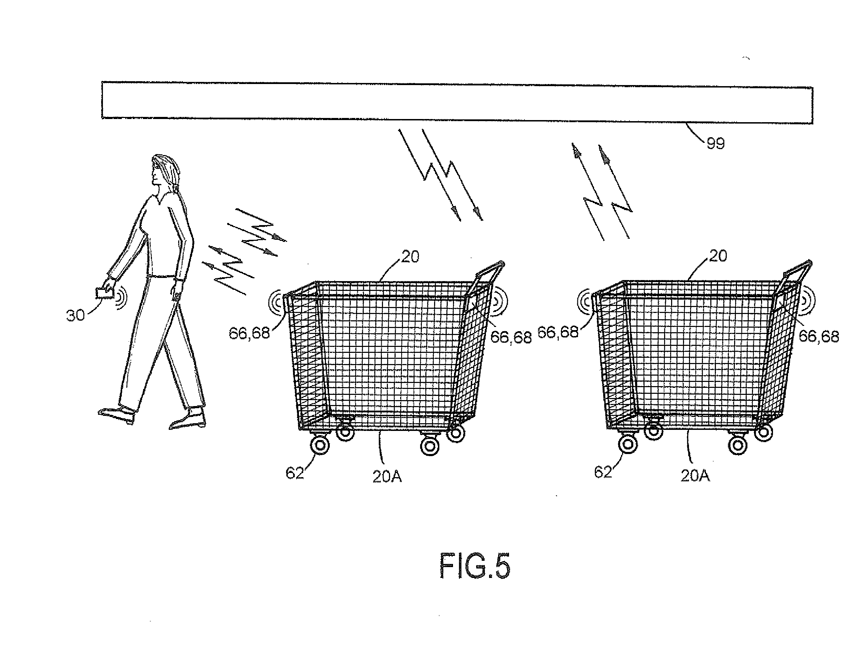

In any of the preferred embodiments, transmitter unit 66 and receiver unit 68 of cart controller 40 may transmit and receive electronic instructions wirelessly via the communications protocol (or via a different communications protocol) (i) to and from another cart 20 of the one or more carts (i.e. a cart 20 other than the cart that the transmitter 66 or receiver 68 is inside of), (ii) to and from the communication device 31 that incorporates user controller 30, (iii) to and from a GPS system (or at least the portions of the GPS system outside system 10) and (iv) to and from a base station 99 (see FIG. 5) which may in one example of a preferred embodiment be a place where carts, for example shopping carts or airport carts) have to be returned to by the user. FIG. 5 happens to depict the base station in the context of shopping carts but the base station 99 can apply to any preferred embodiment of the present invention.

In certain preferred embodiments, the receiver unit 68 and the transmitter unit 66 of each navigation system 60 includes an optical transmitter 67 (or other transmitter) for transmitting in any of a variety of wavelengths and an optical receiver 69 (or other receiver) for receiving in any of a variety of wavelengths, the optical receiver 69 being an optical sensor. Controller 40 of navigation system 60 may also include a processor 70 and software 71 including for controlling the motor 64. Processor 70 may also control the receiver unit 68 and transmitter unit 66.

As shown in FIG. 1, in certain preferred embodiments, navigation system 60 also includes a global positioning system 80 (GPS).

As seen from FIG. 2, each cart 20 may have an actuator, such as a button 92 for a user to press, to actuate one or more times so as to configure that cart as to its communication system. For example, the user may configure the order in which the carts travel. In other preferred embodiments, the provider may do this. The term "provider" includes a manufacturer, distributor, seller, vendor or anyone who sells or otherwise provides the transportation system of the present invention or who sells or provides part of the transportation system. The order may also be configured automatically by a lead cart of the one or more carts.

In other preferred embodiments, the order is set by configuring the software and/or controller by interacting with a display or other input device associated with the controller itself. Such configuring may be done manually by the user or by the provider or, in another preferred embodiment, the software may automatically configure the order in which carts 20 travel.

As seen from FIG. 1, the one or more carts may be configured to travel one in front of the other in a pre-determined order. Any cart (i.e.a piece of luggage) may be configured to the first, second, third, fourth, etc. in the order of moving along the ground, and that order may be re-configured by the user in a preferred embodiment.

In a preferred embodiment, each cart 20 of the one or more carts includes a display 94, such as an LED display 94, for displaying information. The information may include at least one of (i) a request for instructions from the user and (ii) information to the user. The information may also include a location of the cart 20, for example its location relative to one or more other carts 20 in the plurality. The displayed information may also include any other suitable information such as the order of the carts, for example "second" or "third" in the expected line of carts formed by the system, or battery level or a malfunction alert, etc.

In certain preferred embodiments the software 31 of the user controller 30 or the software 71 of the cart controller 40 of navigation system 60 of one or more particular carts 20 of the one or more carts, is programmed (or alternatively can be configured by the user) to transmit an alarm when a particular cart 20 becomes more distant than a pre-defined distance from another cart 20 of the one or more carts, which other cart 20 may be pre-defined. In other preferred embodiments, the alarm may be transmitted when the particular cart becomes more distant than a pre-defined distance from whichever cart 20 is nearest to the particular cart - either nearest in distance or in other versions nearest in order (for example the third cart may be considered nearest the fourth cart). The transmission of the alarm by the software may occur in conjunction with the transmitter unit 66 of the cart controller 40 or in conjnction with the transmitter unit 32 of the user controller 30, as the case may be.

In certain preferred embodiments, instead of the carts 20 moving in a line, they may move in other formations, such as a square or a circle or other geometric figures, which each cart at the corner of a polygonal figure (to take one example). For example, when moving forward or backward, the at least one lead cart may be situated in a center of the one or more carts and other carts of the one or more carts are each situated radially outward from the at least one lead cart.

In one preferred embodiment shown in FIG. 4, (unlike FIG. 2) the user controller 30, or a CPU 39 of user controller 30, which may be incorporated within communication device 40A, may control wireless electronic communications to receive or transmit electronic instructions with at least one lead cart of the one or more carts 20 wherein the at least one lead cart is directly or indirectly (i.e. "indirectly" may comprise having a particular cart 20a communicate wirelessly with cart 20b which in turn communicates wirelessly with cart 20c or other carts 20) in wireless communication with each remaining cart 20 of the one or more carts 20. Thus, after a user or a provider designated or configures the at least one lead cart to be a lead cart the user controller 30 controls electronic wireless communication to the at least one lead cart and that at least one lead cart is directly or indirectly in wireless electronic communication with each remaining cart of the plurality.

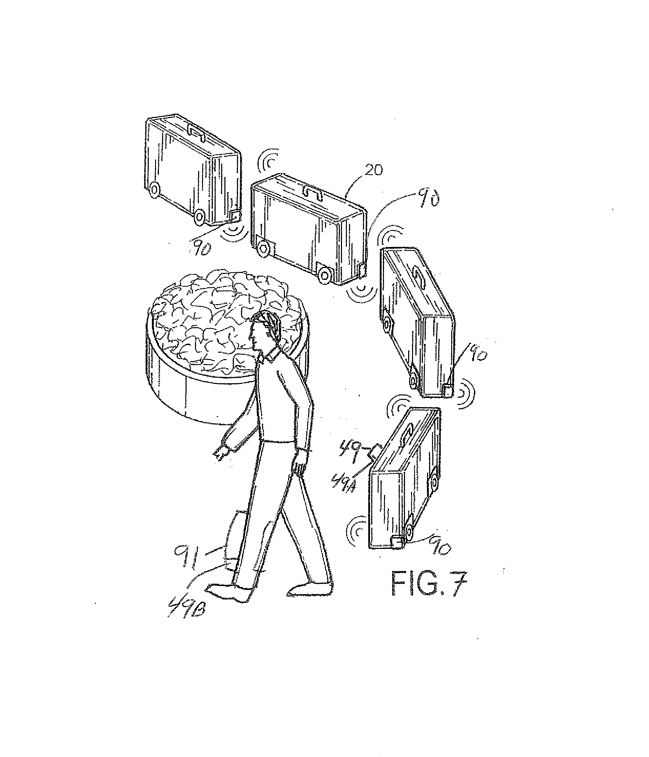

In a different preferred embodiment shown in FIG. 7, the user directs the carts magnetically. Accordingly, the cart transportation system 10 may comprise one or more carts 20 that are each self-mobile and may comprise a lead magnet 91 that alone, or if incorporated into a device, is portable or wearable by a user; each cart of the one or more carts having a set of wheels 62 for moving along a ground and having a follower magnet 90 either inside said each cart or rigidly affixed to said each cart 20 such that the said each cart 20 follows the user when the user moves. The magnetic force between the follower magnet and the lead magnet effective to apply at least a force of 10 newtons when the lead magnet and follower magnet are magnetically linked.

Although FIG. 7 depicts the carts 20 as separated from one another, in actual operation using the magnets, the carts 20 may be adjacent one another due to the magnetism. Moreover, although the wheels 62 shown in FIG. 62 look flat on the sides, wheels 62 of FIG. 7 may be spherically shaped so as to be able to move forward, backward, to the left side and to the right side, or in one preferred embodiment, are configured to turn in any direction over a rotational range of 360 degrees. Furthermore, although not seen in FIG. 7, each cart may have a magnet 90 on each of two ends of the cart 20 for attraction to a cart 20 in front of it and attraction to a cart 20 behind it.

Since pulling something on wheels requires a force that is only a fraction of the force needed to lift that same object, in one preferred embodiment, the magnetic force between the follower magnet and the lead magnet may be such as to be effective to apply at least a force of 10 newtons when the lead magnet and follower magnet are magnetically linked. In a further preferred embodiment, the magnetic force between the follower magnet and the lead magnet is effective to apply at least a force of 20 newtons when the lead magnet and follower magnet are magnetically linked. In a still further preferred embodiment, the magnetic force between the follower magnet and the lead magnet is effective to apply at least a force of 30 newtons when the lead magnet 91 and follower magnet 90 are magnetically linked. In other preferred embodiments, the magnetic force between the follower magnet and the lead magnet is effective to apply at least a force of 5 Newtons or at least 15, 25, 35, 40 or at least 45 Newtons when the lead magnet 91 and follower magnet 90 are magnetically linked. "Magnetically linked" may entail a situation in which the follower magnet 90 and lead magnet 90 are in contact with one another, and also a situation where they are separated by one or more coverings or containers that are in contact with one another.

The one or more carts 20 may be a plurality of carts. The follower(s) magnet 90 of a particular cart 20 of the plurality of carts may have an opposite polarity to a polarity of a follower magnet 90 of a cart 20 adjacent the particular cart 20.

In one preferred embodiment, the lead magnet 91 is attached to a leg of the user and a power supply 49 is generated by movement of the legs of the user while the user is walking, for examaple in an airport. The power supply 49 may include a first metal plate 49B attached to at least one leg of the user and a second metal plate 49A inside or affixed to at least one cart 20 of the one or more carts 20.

While the invention has been described with respect to a limited number of embodiments, it will be appreciated that many variations, modifications and other applications of the invention may be made. Therefore, the claimed invention as recited in the claims that follow is not limited to the embodiments described herein.

## Claims

1. A cart transportation system, comprising:
one or more carts;
a communication device incorporating a user controller, the user controller including at least a transmitter unit, the user controller for wirelessly transmitting electronic instructions via a communications protocol in at least one wavelength to either (i) each cart controller in the one or more carts or to (ii) a lead cart of the one or more carts,
for each cart of the one or more carts, a navigation system for self-mobility in communication with the user controller, the navigation system including at least
(i) a set of traction drivers for movement along a ground,
(ii) a motor connected to the set of traction drivers for actuating the set of traction drivers and for turning at least one traction driver of the set of traction drivers; and
(iii) a cart controller powered by a power supply and including a processor and software, a transmitter unit and a receiver unit, the cart controller of a particular cart of the one or more carts for controlling the motor, transmitter unit and receiver unit and for transmitting and receiving electronic instructions so as to define and control the functionality of the particular cart cart in the one or more carts in accordance with at least one of the following:
(i) to follow the communications device held or worn by a user;
(ii) to return to a base station;
(iii) to follow other carts of the one or more carts; and
(iv) to move from a first location to a second location.

2. The system of claim 1, wherein the navigation system also includes a positioning system controlled by a telecommunications network.

3. The system of any one of claims 1-2, wherein the one or more carts move along automatically so as to facilitate efforts of a user who also pushes a cart of the one or more carts.

4. The system of any one of claims 1-3, wherein the at least one wavelength is at least one of infra red, radio waves, visual wavelength, short wave, mid wavelength, long wavelength, ultra short wavelength and ultra long wavelength.

5. The system of any one of claims 1-4, wherein an order in which the carts move is configurable by at least one of (i) a user who actuates an actuator on each cart, (ii) a provider and (iii) automatically by a lead cart.

6. The system of any one of claims 1-5, wherein the order that the one or more carts is configured to travel in is set by configuring the software and/or the cart controller, either manually or automatically, from the user controller or automatically by the lead cart.

7. The sytem of any one of claims 1-6, wherein the user controller is configured to be at least one of
(i) carried by a user,
(ii) fitted onto an article of clothing,
(iii) fitted onto a keychain, and
(iv) incorporated into a mobile phone or other portable device wherein said mboile phone or other portable device has a dedicated software application for communicating with, configuring and controlling at least one of the carts in one or more carts.

8. The system of any one of claims 1-7, wherein the navigation system allows each cart to travel forward, travel backward, turn left and turn right.

9. The system of any one of claims 1-8, wherein the user controller includes a microphone and voice recognition software.

10. The system of any one of claims 1-9, wherein the navigation system of a particular cart of the one or more carts is configured to either transmit an alarm when the particular cart becomes more distant than a pre-defined distance from another pre-defined cart of the one or more carts or transmit an alarm when the particular cart becomes more distant than a pre-defined distance from whichever cart of the plurality is a nearest cart.

11. The system of any one of claims 1-10, wherein the cart controller defines the functionality of each cart in the plurality in accordance with at least one of the following:
(i) to follow the communications device;
(ii) to return to the base station; and
(iii) to follow other carts of the one or more carts.

12. The system of any one of claims 1-11, wherein at least one lead cart of the one or more carts is designated by a user or a provider, the user controller controls electronic wireless communication to the lead cart and wherein the at least one lead cart is directly or indirectly in wireless electronic communication with each remaining cart of the plurality.

13. A cart transportation system, comprising:
one or more carts that are each self-mobile;
a lead magnet that alone, or incorporated into a device, is portable or wearable by a user;
each cart of the one or more carts having a set of wheels for moving along a ground and having a follower magnet either inside said each cart or rigidly affixed to said each cart such that the said each cart follows the user when the user moves, the magnetic force between the follower magnet and the lead magnet effective to apply at least a force of 10 newtons when the lead magnet and follower magnet are magnetically linked.

14. The system of claim 13, wherein the one or more carts is a plurality of carts and wherein a follower magnet of a particular cart of the plurality of carts has an opposite polarity to a polarity of a follower magnet of a cart adjacent the particular cart.

15. The system of any one of claims 13-14, wherein the lead magnet is attached to a leg of the user and further comprising a power supply generated by movement of the legs of the user while walking, the power supply comprising a first metal plate attached to at least one leg of the user and a second metal plate inside or affixed to at least one cart of the one or more carts.
